# EUROPÄISCHE PATENTSCHRIFT

(11) **EP 3 532 740 B1**
(45) Veröffentlichungstag und Bekanntmachung des Hinweises auf die Patenterteilung: **05.08.2020**
(21) Anmeldenummer: 17788265.1
(22) Anmeldetag: 30.10.2017
(51) Int. Cl.: F16C 17/04, F16C 35/02, F16C 37/00, F16C 33/04, F16C 27/02, F16C 32/06, F16C 33/10

(54) **ROTATIONSSYSTEM MIT AXIALER GASLAGERUNG**
ROTATION SYSTEM WITH AXIAL GAS BEARING
SYSTÈME DE ROTATION COMPRENANT UN PALIER À GAZ AXIAL

(30) Priorität: 31.10.2016 EP 16196569
(43) Veröffentlichungstag der Anmeldung: 04.09.2019
(73) Patentinhaber: Fischer Engineering Solutions AG, 3360 Herzogenbuchsee (CH)
(72) Erfinder: BOLLER, Rolf, 4450 Sissach (CH); HAGER, Simon, 3012 Bern (CH)
(74) Vertreter: Hepp Wenger Ryffel AG
(86) Internationale Anmeldenummer: PCT/EP2017/077725
(87) Internationale Veröffentlichungsnummer: WO 2018/078150

(56) Entgegenhaltungen:
- DE-A1-102007 062 496
- GB-A- 2 074 254
- JP-A- 2013 217 426
- US-A- 4 241 958

## Beschreibung

Die vorliegende Erfindung betrifft ein Rotationssystem mit mindestens einer axialen Gaslagerung.

Rotationssysteme mit axialer Gaslagerung enthalten ein Gehäuse, eine relativ zum Gehäuse rotierbare Welle, mindestens eine an der Welle befestige Lagerscheibe und mindestens eine Lagerbaugruppe, welche die Lagerscheibe relativ zum Gehäuse durch eine axiale Gaslagerung lagert. Die Lagerbaugruppe enthält mindestens ein Axiallagerelement, welches in vielen Bauformen durch zwei Axiallagerscheiben gebildet ist, zwischen denen die Lagerscheibe gelagert ist. Zwischen der Lagerscheibe und den Axiallagerscheiben ist ein Luftspalt gebildet, der für die Gaslagerung sorgt.

Die DE 10 2007 062 496 A1, die die Merkmale des Oberbegriffs des Anspruchs 1 zeigt, offenbart unter anderem Lageranordnungen, die in Verbindung mit Gasturbinentriebwerken verwendet werden. Die Lageranordnung enthält ein Paar Lamellendrucklager und ein Paar Federeinrichtungen, die im Wesentlichen koaxial an dem Paar Lamellendrucklagern angeordnet sind. Auf diese Weise wird das Lager in axialer Richtung gefedert. Die hier vorhandenen Luftspalte sind jedoch abhängig vom Gasdruck, was nachteilig ist. Weiterhin enthalten diese Lageranordnungen jeweils eine Vielzahl von unabhängigen Bauteilen, die allesamt Toleranzen unterliegen, die sich aufaddieren.

In der DE 6907334 U ist eine elektrische Kleinmaschine mit einer umlaufenden Welle offenbart, die zumindest eine in axialer Richtung elastische Zwischenscheibe trägt.

Bei Gaslagerungen ist es entscheidend, dass die Dimensionen des genannten Luftspaltes möglichst konstant bleiben. Ein zu breiter Luftspalt würde nämlich lokal den Gasdruck reduzieren, so dass die Lagerung instabil wäre. Ein zu enger Luftspalt kann dazu führen, dass die Lagerflächen in Kontakt geraten. Insbesondere bei hohen Rotationsgeschwindigkeiten kann dies zur Zerstörung des gesamten Rotationssystems führen. Allerdings sind viele Rotationssysteme oftmals hohen Temperaturen und/oder hohen Temperaturunterschieden und/oder weiteren insbesondere variablen Betriebseinflüssen, wie beispielsweise variablen Gasdrücken oder Fliehkräften, ausgesetzt. Dies kann zu einem erheblichen Verzug von einzelnen Teilen des Rotationssystems führen. Beispielsweise kann sich bei hohen Temperaturen das Gehäuse verformen, was sich über die Lagerung auf die Lagerflächen der Axiallagerelemente überträgt. So können etwa die der Lagerscheibe zugewandten Lagerflächen zweier Axiallagerscheiben ihre Ebenheit oder Parallelität verlieren. Insgesamt kann ein sicherer Betrieb des Rotationssystems dann nicht mehr gewährleistet werden.

Es ist eine Aufgabe der vorliegenden Erfindung, ein verbessertes Rotationssystem bereitzustellen, welches den genannten Anforderungen selbst bei hohen Rotationsgeschwindigkeiten und/oder hohen Temperaturen und/oder hohen Temperaturunterschieden und/oder weiteren insbesondere variablen Betriebseinflüssen, wie beispielsweise variablen Gasdrücken oder Fliehkräften, möglichst gerecht wird. Der zwischen Lagerbaugruppe und Lagerscheibe gebildete Luftspalt soll also selbst unter diesen Bedingungen möglichst konstant, also möglichst unabhängig von diesen Bedingungen, bleiben. Insbesondere sollen in einzelnen Ausführungsbeispiele die Lagerflächen der Axiallagerscheiben möglichst parallel zueinander bleiben.

Diese und weitere Aufgaben werden durch das erfindungsgemässe Rotationssystem gelöst. Es enthält ein Gehäuse, eine relativ zum Gehäuse rotierbare Welle, mindestens eine an der Welle befestigte beispielsweise ebene Lagerscheibe sowie mindestens eine Lagerbaugruppe, welche die Lagerscheibe relativ zum Gehäuse durch eine axiale Gaslagerung lagert. Zwischen der Lagerbaugruppe, insbesondere deren unten noch beschriebenen Axiallagerscheiben, und der Lagerscheibe ist also ein Luftspalt gebildet. Bei der axialen Gaslagerung kann es sich um eine aerodynamische Gaslagerung, eine aerostatische Gaslagerung, eine Kippsegment-Gaslagerung (englisch: "tilting pad gas bearing") oder eine Folienlagerung handeln. Die Lagerscheibe kann, wie oben erwähnt, eben ausgebildet sein; alternativ kann sie aber auch beispielsweise konisch sein oder eine frei Geometrie aufweisen, sofern gegenüberliegende Lagerflächen einen definierten Luftspalt erlauben.

Erfindungsgemäss weist die Lagerbaugruppe von innen nach aussen eine die Lagerscheibe lagernden radial inneren Bereich, einen radial mittleren Bereich und einen vom Gehäuse gehaltenen radial äusseren Bereich auf. Dabei enthält der radial innere Bereich mindestens ein Axiallagerelement und mindestens ein Halteelement, wobei die Lagerscheibe mittels des Axiallagerelementes gelagert ist und das Halteelement das Axiallagerelement in axialer Richtung hält.

Durch diese erfindungsgemässe Ausbildung kann der zwischen Lagerbaugruppe und Lagerscheibe gebildete Luftspalt selbst bei hohen Rotationsgeschwindigkeiten und/oder hohen Temperaturen und/oder hohen Temperaturunterschieden und/oder weiteren insbesondere variablen Betriebseinflüssen, wie beispielsweise variablen Gasdrücken oder Fliehkräften, sehr konstant bleiben, also praktisch unabhängig von diesen Betriebseinflüssen. Denn insbesondere können entstehende Gehäuseverformungen abhängig von Betriebseinflüssen so minimiert werden, dass sich der gewünschte Luftspalt maximal in einem sehr geringen zulässigen Bereich verformt. Das Rotationssystem kann also auch unter diesen Bedingungen betrieben werden, ohne dass das Risiko einer übermässigen Verformung des Luftspaltes entsteht.

In einigen Ausführungsbeispielen kann der radial mittlere Bereich der Lagerbaugruppe elastischer ausgebildet sein als ihr radial innerer Bereich. Hierdurch kann der Teil der Lagerbaugruppe, der die Lagerscheibe lagert, insgesamt eher starr ausgebildet sein, so dass beispielsweise die Axiallagerscheiben der Lagerbaugruppe auch bei einem Verzug des Gehäuses vergleichsweise parallel zueinander bleiben. Durch seine relativ elastischere Ausbildung erlaubt der radial mittlere Bereich insgesamt eine gewisse Elastizität des radial inneren Bereichs gegenüber dem sich verziehenden Gehäuse. Der radial mittlere Bereich kann insbesondere aufgrund zumindest einer Materialschwächung des radial mittleren Bereiches elastischer ausgebildet sein als der radial innere Bereich.

Ferner kann der radial mittlere Bereich der Lagerbaugruppe elastischer ausgebildet sein als ihr radial äusserer Bereich. Auf diese Weise kann die Lagerbaugruppe fest und/oder genau definiert am Gehäuse angebunden werden. Der radial mittlere Bereich kann insbesondere aufgrund zumindest einer Materialschwächung des radial mittleren Bereiches elastischer ausgebildet sein als der radial äussere Bereich.

Eine solche Materialschwächung und eine elastische Ausbildung des mittleren Bereichs tragen weiter dazu bei, dass der zwischen Lagerbaugruppe und Lagerscheibe gebildete Luftspalt selbst bei hohen Rotationsgeschwindigkeiten und/oder hohen Temperaturen und/oder hohen Temperaturunterschieden und/oder weiteren insbesondere variablen Betriebseinflüssen, wie beispielsweise variablen Gasdrücken oder Fliehkräften, sehr konstant bleibt und folglich das Rotationssystem auch unter diesen Bedingungen betrieben werden kann, ohne dass das Risiko einer übermässigen Verformung des Luftspaltes entsteht.

Mindestens eine der Materialschwächungen kann durch eine in axialer Richtung gebildete Vertiefung oder eine die Lagerbaugruppe durchdringende Öffnung gebildet sein. Beispielsweise kann die Vertiefung der Öffnung in einer unten noch näher erläuterten Distanzscheibe gebildet sein, insbesondere in einem inneren Abschnitt einer solchen Distanzscheibe. Die Vertiefung kann beispielsweise durch eine lasergesinterte Struktur, eine Bohrung, einen Axialeinstich, eine Laserstruktur, eine Giessrippe und/oder eine gefräste Niere gebildet sein.

Alternativ kann die Materialschwächung durch eine Kombination verschiedener Materialien und/oder eine Kombination an sich gleicher Materialien mit verschiedenen Eigenschaften erreicht werden. Verschiedene Metalle können zu einem Bimetall zusammengefügt sein. Eine Materialschwächung kann auch durch eine Mischung von zwei oder mehr Materialien, insbesondere von zwei oder mehr Metallen, erreicht werden. An sich gleiche Materialien mit verschiedenen Eigenschaften können beispielsweise durch verschiedene Arten der Herstellung und/oder Bearbeitung erhalten werden, etwa durch Weichglühen, Schäumen und/oder Lasersintern.

In vorteilhaften Ausführungsformen hält das Halteelement das Axiallagerelement durch Klemmen, Schrauben, Löten, Schweissen, Schrumpfen, Pressen, Kleben, Kristallisationsverbindung, Pressverbindung, Kunststoffguss und/oder Lasersintern.

Das mindestens eine Axiallagerelement kann zwei Axiallagerscheiben enthalten oder dadurch gebildet sein, zwischen denen die Lagerscheibe gelagert ist. Das mindestens eine Halteelement kann zwei Klemmringe enthalten oder dadurch gebildet sein, welche die Axiallagerscheiben in axialer Richtung einklemmen. Eine solche Einklemmung beeinflusst die Grundgeometrie der Axiallagerscheiben nicht unzulässig und/oder verhindert unzulässige Verschiebungen. Durch die Einklemmung sind kleine Verschiebungen in radialer Richtung möglich, ohne dabei den Luftspalt unzulässig zu beeinflussen.

Bevorzugt enthält das Halteelement zwei Klemmblöcke, die in einem radial inneren Bereich jeweils einen der Klemmringe aufweisen. Zur Vereinfachung der Bauform können die Klemmblöcke jeweils einstückig ausgebildet sein.

Bevorzugt ist der radial mittlere Bereich der Lagerbaugruppe durch einen inneren Abschnitt einer Distanzscheibe gebildet, an dem der radial innere Bereich der Lagerbaugruppe befestigt ist. Eine solche Distanzscheibe ermöglicht ein einfaches und/oder genaues Abstimmen des Luftspalts. Die Distanzscheibe kann mindestens ein Metall und/oder mindestens einen Kunststoff enthalten oder daraus bestehen.

Insbesondere können die oben beschriebenen Klemmringe oder die die Klemmringe aufweisenden Klemmblöcke am inneren Abschnitt der Distanzscheibe befestigt sein. Bevorzugt erstrecken sich dabei die Klemmringe oder die die Klemmringe aufweisenden Klemmblöcke in entgegengesetzten axialen Richtungen vom inneren Abschnitt der Distanzscheibe weg.

Dabei ist es besonders vorteilhaft, wenn der radial äussere Bereich der Lagerbaugruppe durch einen äusseren Abschnitt der Distanzscheibe gebildet ist, der am Gehäuse gehalten ist. In Kombination mit der Distanzscheibe und dem Gehäuse ergibt dies eine höhere Stabilität, aber insbesondere auch eine genaue Anbindung.

Weiterhin vorteilhaft ist es, wenn sich der innere Abschnitt der Distanzscheibe bis zwischen zwei Axiallagerscheiben zum radial inneren Bereich der Lagerbaugruppe erstreckt. Mit Hilfe der oben beschriebenen Klemmringe können dann die Axiallagerscheiben in axialer Richtung gegen den inneren Abschnitt der Distanzscheibe verspannt werden, so dass jede der beiden Axiallagerscheiben in axialer Richtung zwischen dem inneren Abschnitt der Distanzscheibe und einem der Klemmblöcke eingeklemmt sind.

Der radial mittlere Bereich, insbesondere die Distanzscheibe, weist mit Vorteil einen Elastizitätsmodul im Bereich von 1'000 MPa bis 700'000 MPa, bevorzugt von 3'000 MPa bis 400'000 MPa, besonders bevorzugt von 60'000 MPa bis 220'000 MPa auf.

Der radial innere Bereich, insbesondere die Klemmringe, weisen mit Vorteil einen Elastizitätsmodul im Bereich von 1'000 MPa bis 700'000 MPa, bevorzugt von 3'000 MPa bis 400'000 MPa, besonders bevorzugt von 60'000 MPa bis 220'000 MPa auf.

Der radial innere Bereich, insbesondere die Axiallagerscheiben, weisen mit Vorteil einen Elastizitätsmodul im Bereich von 10'000 MPa bis 900'000 MPa, bevorzugt von 100'000 MPa bis 700'000 MPa, besonders bevorzugt von 200'000 MPa bis 650'000 MPa auf.

Besonders bevorzugt weist die Lagerbaugruppe mindestens einen sich in Umfangsrichtung erstreckenden Kühlkanal auf. Ein solcher Kühlkanal kann beispielsweise innerhalb der an der Welle befestigten Lagerscheibe oder ausserhalb, insbesondere radial ausserhalb, dieser Lagerscheibe gebildet sein. Mit Hilfe eines solchen Kühlkanals kann die Temperaturverteilung innerhalb des Rotationssystems eingestellt werden. Dies kann einen weiteren Beitrag dazu leisten, dass der Luftspalt eine möglichst definierte Geometrie behält. Der Kühlkanal kann beispielsweise durch eine Nut definiert sein, die in einem radial äusseren Bereich der oben genannten Klemmblöcke gebildet ist und die in axialer Richtung von der Lagerscheibe weg durch einen ringförmigen Deckel verschlossen ist. Alternativ kann der Kühlkanal in der an der Welle befestigten Lagerscheibe, in einem Axiallagerelement, insbesondere einer Axiallagerscheibe, in der Distanzscheibe oder im Gehäuse gebildet sein.

Alternativ oder zusätzlich kann eine Kühlung beispielweise durch eine radiale Nut an den Klemmblöcken im äusseren Bereich ausgebildet sein und über Dichtungselemente, beispielsweise O-Ringe, zum Gehäuse hin abgedichtet werden.

Der sich in Umfangsrichtung erstreckende Kühlkanal kann mit einem radialen Kühlkanal in der Lagerbaugruppe, insbesondere in der Distanzscheibe, verbunden sein. Ferner kann der radiale Kühlkanal in der Lagerbaugruppe mit einem axialen Kühlkanal im Gehäuse verbunden sein. Auf diese Weise kann die Lageranordnung besonders effektiv gekühlt werden.

Im Kühlkanal kann mindestens eine Oberflächenvergrösserungsstruktur vorhanden sein. Darunter wird eine Struktur verstanden, die für eine Vergrösserung der den Kühlkanal begrenzenden Flächen sorgt. Auf diese Weise kann eine noch weiter verbesserte Wärmeübertragung und damit Kühlung erreicht werden. Die Oberflächenvergrösserungsstruktur kann beispielsweise eine oder mehrere Kühlrippen enthalten, die etwa kragenförmig ausgebildet sein können.

In einigen Ausführungsbeispielen kann eine Axiallagerscheibe auch einstückig mit einem Klemmblock ausgebildet sein, was die Herstellung erleichtert und die Toleranzen reduziert.

Bei dem Rotationssystem kann es sich um eine insbesondere elektrisch angetriebene Strömungsmaschine handeln, wie beispielsweise einen Verdichter, insbesondere einen Turboverdichter, einen Motor oder einen Generator, um eine Turbine, insbesondere einen Turbogenerator, um einen Turbolader, um ein Kupplungssystem (insbesondere eine Magnetkupplung) oder um ein Schwungrad, insbesondere einen kinetischen Speicher.

Im Folgenden wird die Erfindung anhand eines Ausführungsbeispiels näher erläutert. Dabei zeigen, jeweils in einer seitlichen Schnittansicht,
- Figur 1:: ein erstes erfindungsgemässes Rotationssystem;
- Figur 2:: ein zweites erfindungsgemässes Rotationssystem mit vereinfachten Klemmblöcken;
- Figur 3:: ein nicht erfindungsgemässes Rotationssystem mit einem einstückig mit einer Axiallagerscheibe ausgebildeten Klemmblock;
- Figur 4:: ein drittes erfindungsgemässes Rotationssystem mit Öffnungen als Materialschwächung;
- Figur 5:: ein viertes erfindungsgemässes Rotationssystem mit axialen Einstichen als Materialschwächungen;
- Figur 6:: ein fünftes erfindungsgemässes Rotationssystem mit einem Bimetall als Materialschwächung;
- Figur 7:: ein sechstes erfindungsgemässes Rotationssystem mit einem radialen und einem axialen Kühlkanal;
- Figur 8:: ein siebtes erfindungsgemässes Rotationssystem mit einem Kühlkanal in der Lagerscheibe;
- Figur 9:: ein achtes erfindungsgemässes Rotationssystem mit Kühlkanälen in der Distanzscheibe;
- Figur 10:: ein neuntes erfindungsgemässes Rotationssystem mit Kühlkanälen in den Klemmblöcken;
- Figur 11:: ein zehntes erfindungsgemässes Rotationssystem mit Kühlkanälen im Gehäuse;
- Figur 12:: ein elftes erfindungsgemässes Rotationssystem mit mehreren Kühlkanälen;
- Figur 13:: ein zwölftes erfindungsgemässes Rotationssystem mit mehreren Kühlkanälen.

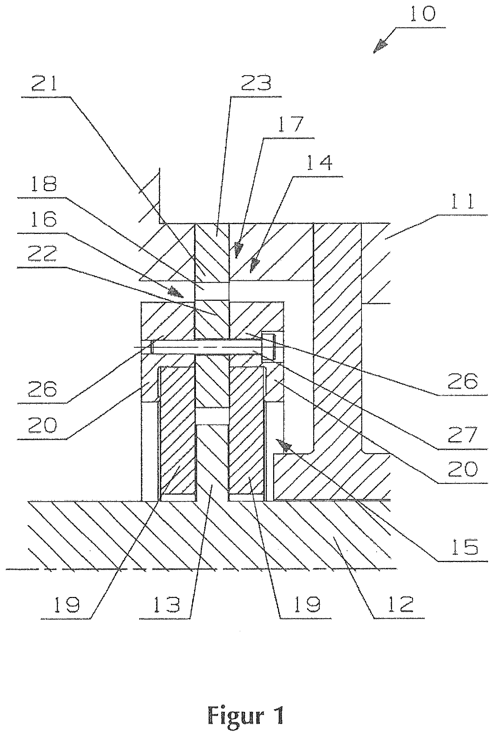

Das in Figur 1 dargestellt Rotationssystem 10 ist als Turboverdichter ausgebildet. Es enthält ein Gehäuse 11 und eine relativ zum Gehäuse 11 rotierbare Welle 12. An der Welle 12 ist eine in diesem Ausführungsbeispiel ebene Lagerscheibe 13 befestigt. Eine Lagerbaugruppe 14 lagert die Lagerscheibe 13 relativ zum Gehäuse 11 durch eine axiale Gaslagerung.

Die Lagerbaugruppe 14 weist von innen nach aussen einen die Lagerscheibe 13 lagernden radialen inneren Bereich 15, einen radial mittleren Bereich 16 und einen vom Gehäuse 11 gehaltenen radialen äusseren Bereich 17 auf. Genauer enthält sie eine Distanzscheibe 21 mit einem inneren Abschnitt 22 und einem äusseren Abschnitt 23. Der äussere Abschnitt 23 der Distanzscheibe 21 bildet den radial äusseren Bereich 17 der Lagerbaugruppe 14, der am Gehäuse 11 gehalten ist. Der innere Abschnitt 22 der Distanzscheibe 21 bildet einen radial mittleren Bereich 16 der Lagerbaugruppe 14.

Der innere Abschnitt 22 der Distanzscheibe 21 erstreckt sich bis zwischen zwei Axiallagerscheiben 19, welche Axiallagerelemente 19 bilden. Zwischen den Axiallagerscheiben 19 ist die Lagerscheibe 13 gelagert, wobei zwischen den Axiallagerscheiben 19 und der Lagerscheibe 13 gebildete, hier nicht erkennbare Luftspalte für eine axiale Gaslagerung sorgen. Am inneren Abschnitt 22 der Distanzscheibe 21 sind mit Hilfe von Spannschrauben 27 zwei Klemmblöcke 26 befestigt, die sich in entgegengesetzten axialen Richtungen vom inneren Abschnitt 22 der Distanzscheibe 21 weg erstrecken und von denen hier nur eine erkennbar ist. Die Spannschrauben 27 durchdringen jeweils beide Klemmblöcke 26 und die Distanzscheibe 21, und ihre Schraubenköpfe sind in Sackbohrungen des rechts dargestellten Klemmblocks 26 aufgenommen. Die Klemmblöcke 26 verfügen im radial inneren Bereich über je ein Halteelement, welches als Klemmring 20 ausgebildet ist. Mittels der Spannschrauben 27 verspannen die Klemmringe 20 die Axiallagerscheiben 19 in axialer Richtung gegen den inneren Abschnitt 22 der Distanzscheibe 21, so dass jede der beiden Axiallagerscheiben 19 in axialer Richtung zwischen dem inneren Abschnitt 22 der Distanzscheibe 21 und einem der beiden Klemmringe 20 eingeklemmt sind. Der Klemmblock 26 und die Axiallagerscheiben 19 bilden zusammen einen radial inneren Bereich 15 der Lagerbaugruppe 14.

Im hier dargestellten Ausführungsbeispiel enthält der innere Abschnitt 22 der Distanzscheibe 21 (also der radial mittlere Bereich 16 der Lagerbaugruppe 14) mehrere ihn in axialer Richtung durchdringende Öffnungen 18. Auf diese Weise bilden die Öffnungen 18 Materialschwächungen, die dafür sorgen, dass der radial mittlere Bereich 16 der Lagerbaugruppe 14 elastischer ausgebildet ist als der radial innere Bereich 15 (also als die Klemmblöcke 26 und die Axiallagerscheiben 19). Hierdurch ist der Teil der Lagerbaugruppe 14, der die Lagerscheibe 13 lagert, insgesamt eher starr ausgebildet, so dass die Axiallagerscheiben 19 auch bei einem Verzug des Gehäuses 11 vergleichsweise parallel zueinander bleiben. Durch seine relativ elastischere Ausbildung erlaubt der radial mittlere Bereich 16 insgesamt eine gewisses Elastizität des radial inneren Bereichs 15 gegenüber dem sich verziehenden Gehäuse 11. Alternativ oder zusätzlich zu den Öffnungen 18 können auch Vertiefungen vorgesehen sein, welche ebenfalls Materialschwächungen mit den genannten Effekten bilden können. Aufgrund der genannten Öffnungen 18 ist der radial mittlere Bereich 16 auch elastischer ausgebildet als der radial äussere Bereich 17.

Die Distanzscheibe 21 weist ein Elastizitätsmodul von bevorzugt 60'000 MPa bis 220'000 MPa auf. Die Axiallagerscheiben 19 verfügen bevorzugt über ein Elastizitätsmodul von 200'000 MPa bis 650'000 MPa. Die Klemmringe 20 haben einen bevorzugten Elastizitätsmodul von 60'000 MPa bis 220'000 MPa.

Dieses erfindungsgemässe Rotationssystem 10 sorgt selbst bei hohen Rotationsgeschwindigkeiten und Temperaturen für eine hohe Parallelität zwischen der Lagerscheibe 13 und den Axiallagerscheiben 19. Der vergleichsweise starre innere Bereich 15, der durch die Klemmblöcke 26 und die Axiallagerscheiben 19 gebildet ist, gibt dabei die Parallelität vor. Zudem erfolgt aufgrund der Öffnungen 18 eine mechanische Entkopplung zwischen den Axiallagerscheiben 19 und dem Gehäuse 11. Ferner kann mit Hilfe der Kühlkanäle 24 gezielt die Temperaturverteilung beeinflusst werden. In dem hier beschriebenen Ausführungsbeispiel sind die Klemmblöcke 26 von der Distanzscheibe 21 baulich getrennt, sodass die Bauteile jeweils einfacher geformt sein können und die Herstellung damit insgesamt günstiger ist.

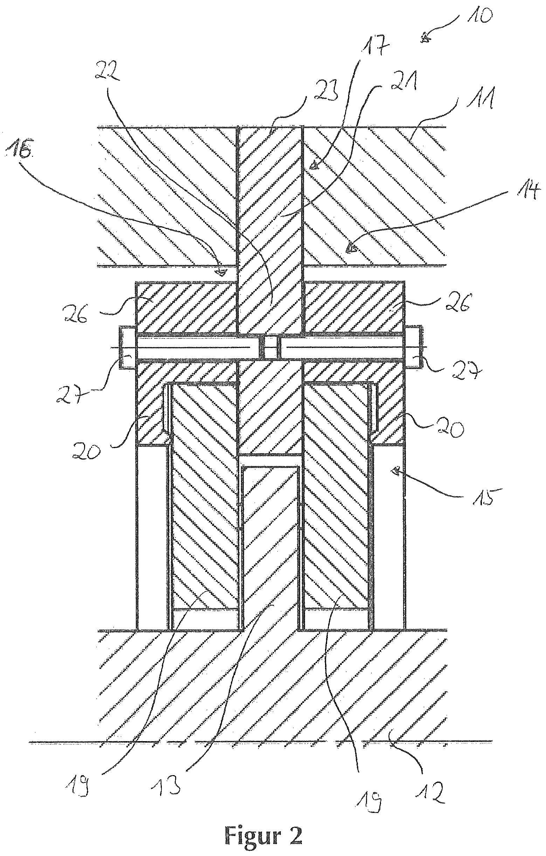

Beim Rotationsystem 10 gemäss Figur 2 ist jeder der beiden Klemmblöcke 26 mit jeweiligen Spannschrauben 27 in axialer Richtung mit der Distanzscheibe 21 verspannt. Im Gegensatz zu Figur 1 sind die Schraubenköpfe der Spannschrauben 27 hier nicht in Sackbohrungen aufgenommen.

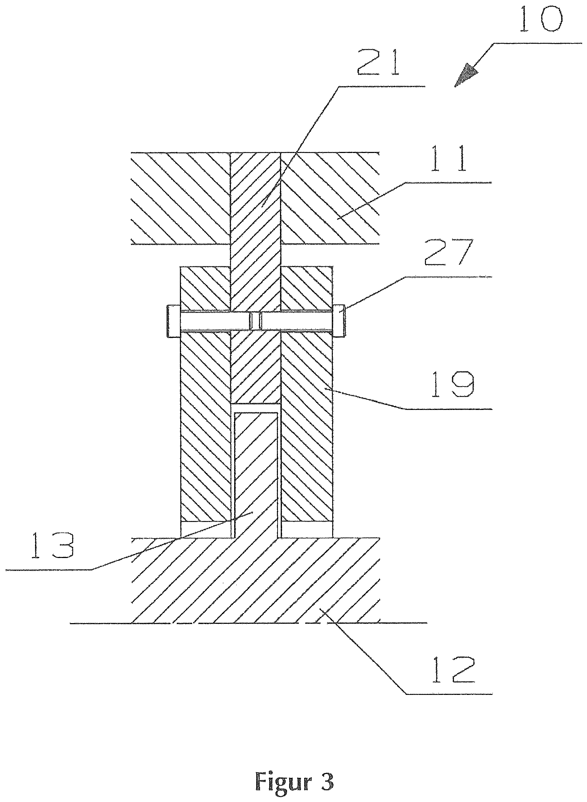

Im Gegensatz zu Figur 2 sind beim nicht erfindungsgemässen Rotationssystem 10 gemäss Figur 3 die Axiallagerscheiben 19 einstückig mit dem Klemmblock ausgebildet. Alternativ kann auch nur eine der beiden Axiallagerscheiben 19 einstückig mit einem Klemmblock ausgebildet sein.

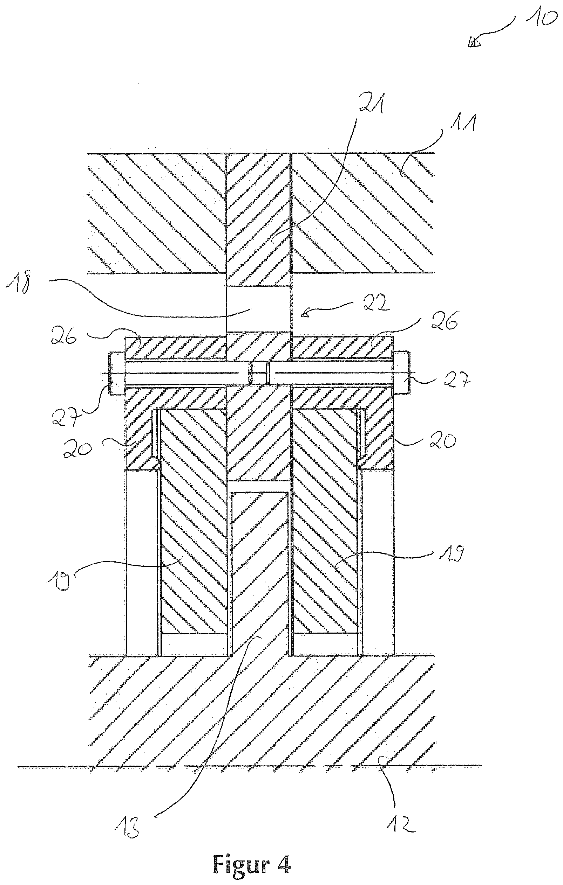

Das Rotationssystem 10 gemäss Figur 4 unterscheidet sich von dem in Figur 2 dargestellten darin, dass der innere Abschnitt 22 der Distanzscheibe 21 von mehreren in axialer Richtung verlaufenden Öffnungen 18 durchdrungen ist.

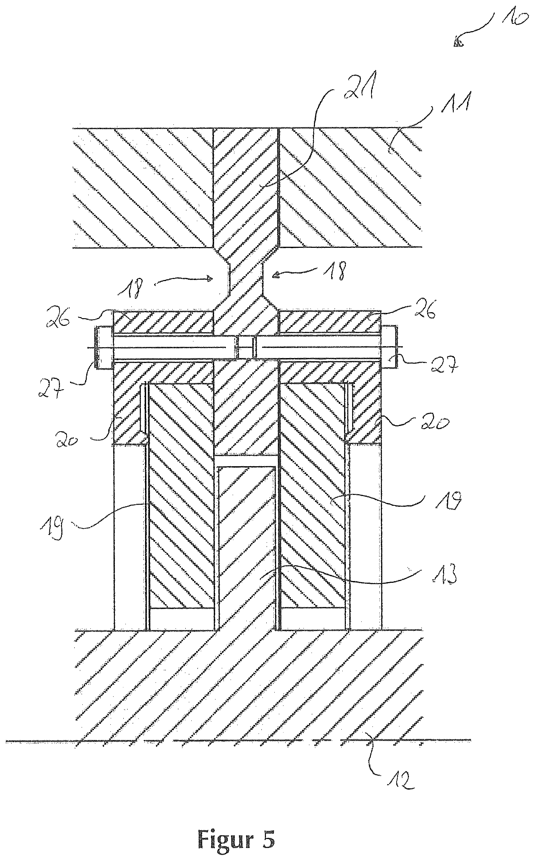

Bei dem in Figur 5 dargestellten Rotationssystem 10 ist die Materialschwächung nicht durch eine die Distanzscheibe 21 komplett durchdringende Öffnung, sondern durch beidseitige axiale Einstiche 18 realisiert, die in axialer Richtung gebildete Vertiefungen 18 darstellen. Abweichend von diesem Ausführungsbeispiel können die Vertiefungen 18 auch nur einseitig und/oder asymmetrisch angeordnet sind.

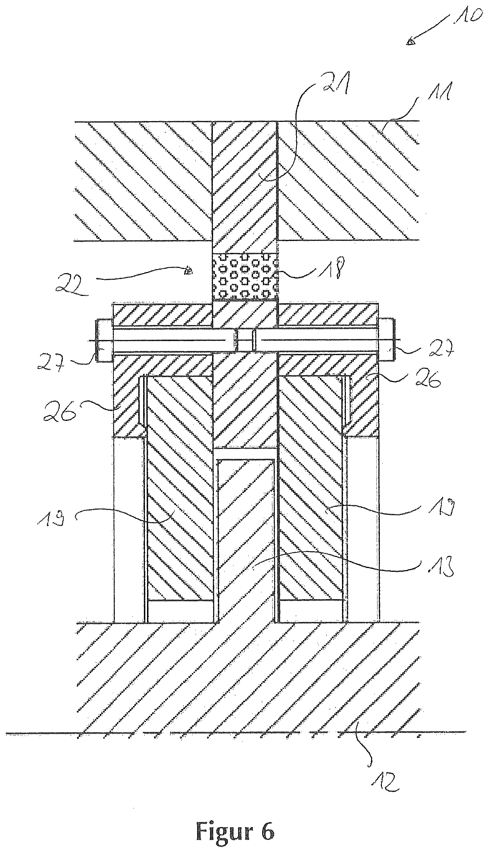

Im Ausführungsbeispiel gemäss Figur 6 ist die Materialschwächung 18 durch ein Bimetall oder eine Mischung von zwei oder mehr Materialien, insbesondere von zwei oder mehr Metallen, im inneren Abschnitt 22 der Distanzscheibe 21 gebildet. Auch auf dieses Weise kann die Steifigkeit der Distanzscheibe 21 eingestellt werden.

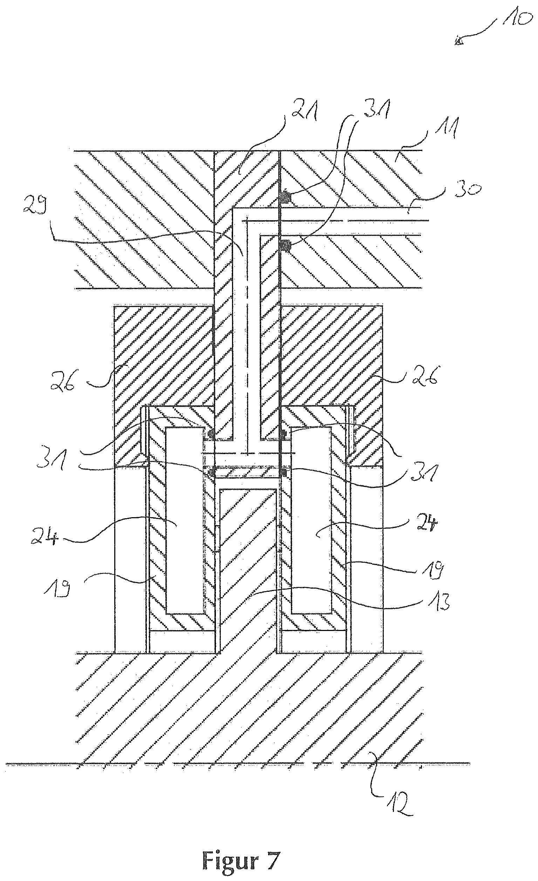

In Figur 7 enthalten die Axiallagerscheiben 19 jeweils einen sich in Umfangsrichtung erstreckenden Kühlkanal 24, der über radiale Kühlkanäle 29 der Distanzscheibe 21 mit einem axialen Kühlkanal 30 des Gehäuses 11 verbunden sind. Auf diese Weise kann ein Kühlmedium, wie beispielsweise Wasser, durch den axialen Kühlkanal 30 und die radialen Kühlkanäle 29 in die Kühlkanäle 24 eingeleitet werden. An den Verbindungsstellen zwischen den Axiallagerscheiben 19 und der Distanzscheibe 21 sowie zwischen der Distanzscheibe 21 und dem Gehäuse 11 sind O-Ringe 31 vorgesehen, die einer elastischen Abdichtung dienen.

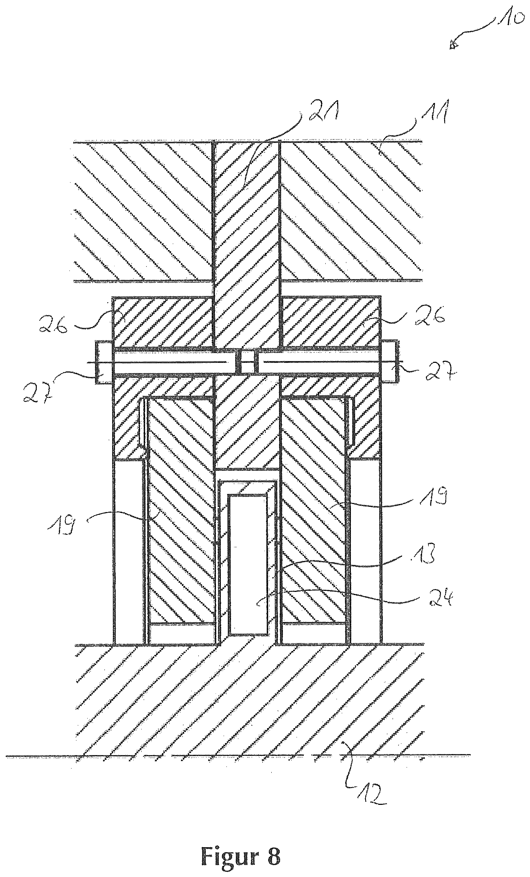

Figur 8 zeigt eine weitere Ausführungsform, in der die Lagerscheibe 13 einen sich in Umfangsrichtung erstreckenden Kühlkanal 24 aufweist, der durch die Welle 12 mit einem Kühlmedium versorgt werden kann (nicht eingezeichnet).

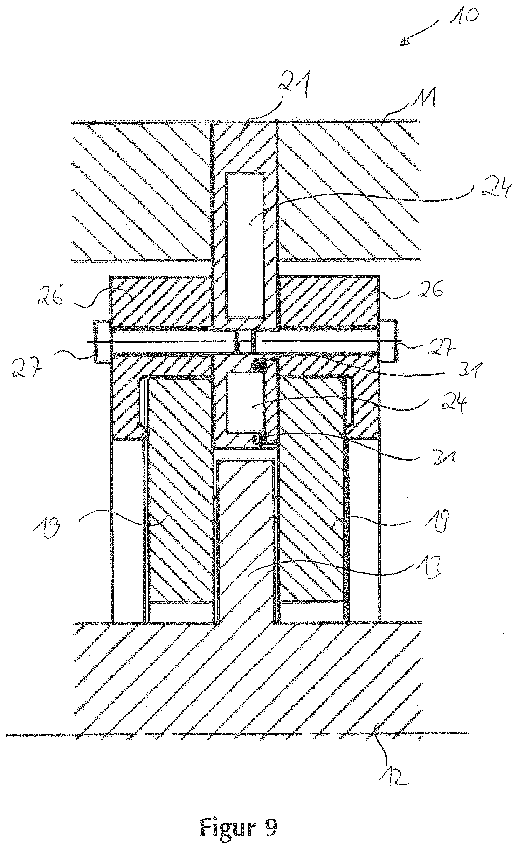

In Figur 9 ist gezeigt, dass auch die Distanzscheibe 21 einen beispielsweise in Umfangsrichtung verlaufenden Kühlkanal 24 aufweisen kann - und zwar sowohl radial innerhalb als auch radial ausserhalb der Spannschrauben 27. Die radial innerhalb der Spannschrauben 27 verlaufenden Kühlkanäle 24 werden durch zwei Teile der Distanzscheibe 21 eingeschlossen, die über O-Ringe 31 in axialer Richtung verbunden sind. Die beiden Kühlkanäle 24 sind über in der Schnittansicht gemäss Figur 9 nicht erkennbare radiale Kühlkanäle verbunden.

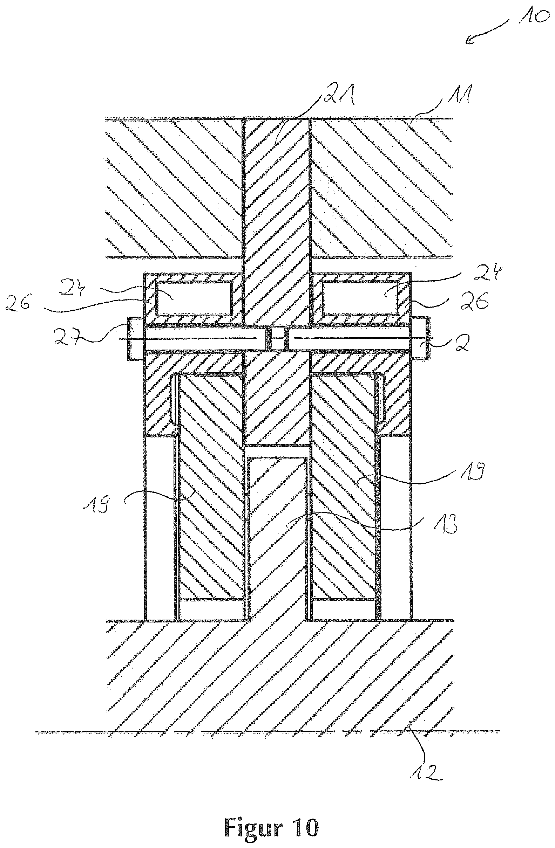

In Figur 10 sind die Klemmblöcke 26 radial ausserhalb von den Spannschrauben 27 mit in Umfangsrichtung verlaufenden Kühlkanälen 24 versehen.

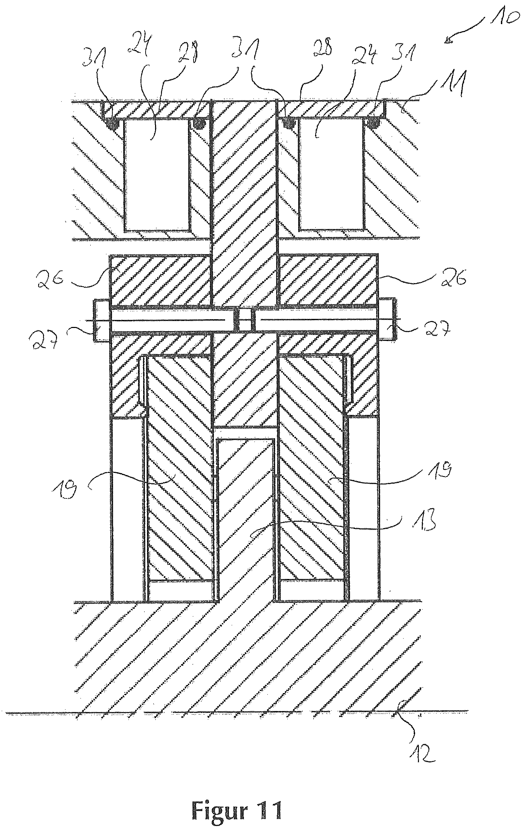

In Figur 11 ist es das Gehäuse 11, das mit beispielsweise in Umfangsrichtung verlaufenden Kühlkanälen 24 versehen ist. Diese Kühlkanäle 24 sind in axialer Richtung beidseitig von der Distanzscheibe 21 angeordnet und in radialer Richtung nach aussen durch Deckel 28 abgeschlossen, die mit O-Ringen 31 dichtend aufgesetzt sind. Die Kühlkanäle 24 können alternativ auch ohne Deckel direkt in das Gehäuse 11 eingebracht werden, beispielsweise durch Lasersintern oder durch Laserschweissen.

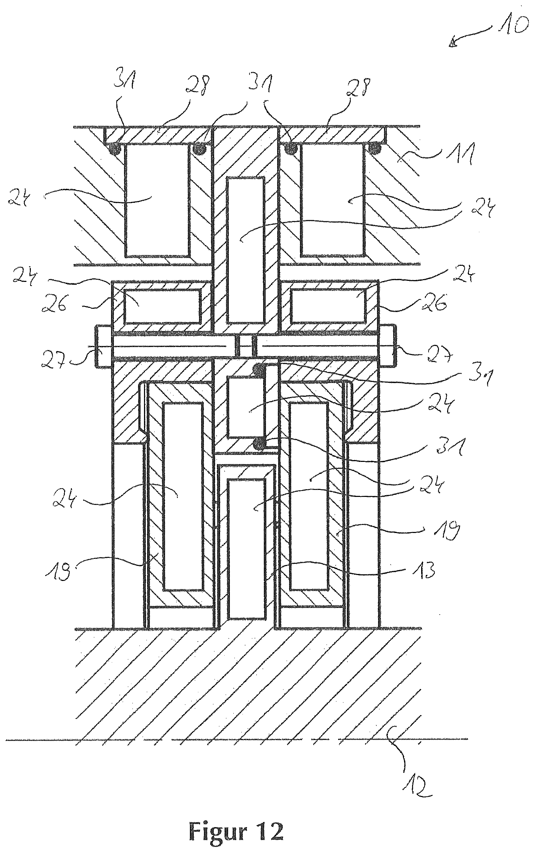

In Figur 12 ist eine Ausführungsform dargestellt, die sämtliche in den Figuren 7 bis 11 gezeigten Kühlkanäle 24 enthält (mit Ausnahme der beiden in Figur 7 gezeigten Kühlkanäle 29 und 30).

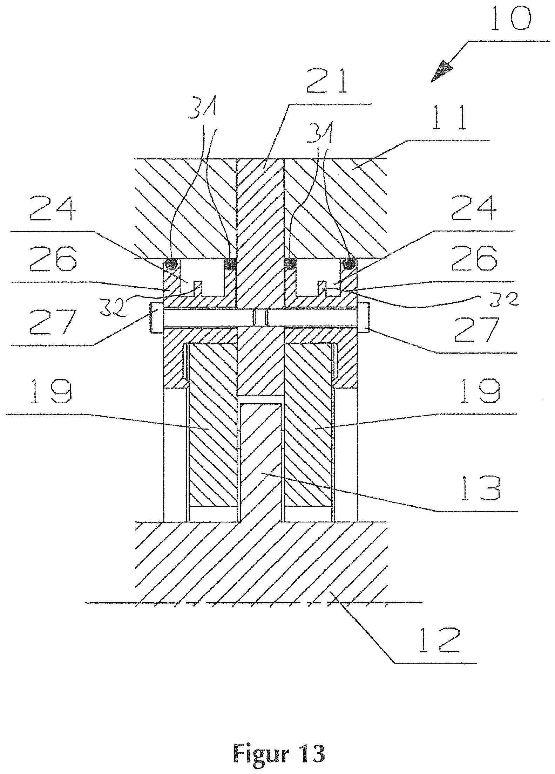

Das in Figur 13 dargestellte Ausführungsbeispiel enthält in Umfangsrichtung verlaufende Kühlkanäle 24, welche beidseits der Distanzscheibe 21 angeordnet und zwischen den Klemmblöcken 26 und dem Gehäuse 11 gebildet sind. O-Ringe 31 sind zur elastischen Abdichtung zwischen Klemmblöcken 26 und Gehäuse 11 vorgesehen.

An der radialen Aussenseite der Klemmblöcke 26 sind umlaufende Kühlrippen 32 angeformt, die sich in die Kühlkanäle 24 hinein erstrecken. Die Kühlrippen 32 vergrössern die Oberfläche in den Kühlkanälen 24 und tragen somit zu einer besseren Wärmeübertragung und besseren Kühlung des Axiallagers bei.

## Patentansprüche

1. Rotationssystem (10) mit mindestens einer axialen Gaslagerung, enthaltend:
- ein Gehäuse (11),
- eine relativ zum Gehäuse (11) rotierbare Welle (12),
- mindestens eine an der Welle (12) befestigte Lagerscheibe (13),
- mindestens eine Lagerbaugruppe (14), welche die Lagerscheibe (13) relativ zum Gehäuse (11) durch eine axiale Gaslagerung lagert,
**dadurch gekennzeichnet, dass**
die Lagerbaugruppe (14) von innen nach aussen einen die Lagerscheibe (13) lagernden radial inneren Bereich (15), einen radial mittleren Bereich (16) und einen vom Gehäuse (11) gehaltenen radial äusseren Bereich (17) aufweist, wobei der radial innere Bereich (15) mindestens ein Axiallagerelement (19) und mindestens ein Halteelement (20) enthält, wobei die Lagerscheibe (13) mittels des Axiallagerelementes (19) gelagert ist und das Halteelement (20) das Axiallagerelement (19) in axialer Richtung hält.

2. Rotationssystem (10) gemäss Anspruch 1,
**dadurch gekennzeichnet, dass**
der radial mittlere Bereich (16) elastischer ausgebildet ist als der radial innere Bereich (15), insbesondere aufgrund zumindest einer Materialschwächung (18) des radial mittleren Bereiches (16).

3. Rotationssystem (10) gemäss einem der vorangehenden Ansprüche,
**dadurch gekennzeichnet, dass**
der radial mittlere Bereich (16) elastischer ausgebildet ist als der radial äussere Bereich (17), insbesondere aufgrund zumindest einer Materialschwächung (18) des radial mittleren Bereiches (16).

4. Rotationssystem (10) gemäss einem der Ansprüche 2 und 3,
**dadurch gekennzeichnet, dass**
mindestens eine der Materialschwächungen (18) durch eine in axialer Richtung gebildete Vertiefung (18) oder eine die Lagerbaugruppe (14) durchdringende Öffnung (18) gebildet ist.

5. Rotationssystem (10) gemäss einem der vorangehenden Ansprüche,
**dadurch gekennzeichnet, dass**
das Halteelement (20) das Axiallagerelement (19) durch Klemmen, Schrauben, Löten, Schweissen, Schrumpfen, Pressen, Kleben, Kristallisationsverbindung Pressverbindung, Kunststoffguss und/oder Lasersintern hält.

6. Rotationssystem (10) gemäss Anspruch 5,
**dadurch gekennzeichnet, dass**
das mindestens eine Axiallagerelement (19) zwei Axiallagerscheiben (19) enthält oder dadurch gebildet ist und das mindestens eine Halteelement (20) zwei Klemmringe (20) enthält oder dadurch gebildet ist, wobei die Lagerscheibe (13) zwischen den Axiallagerscheiben (19) gelagert ist und die Klemmringe (20) die Axiallagerscheiben (19) in axialer Richtung einklemmen.

7. Rotationssystem (10) gemäss einem der vorangehenden Ansprüche,
**dadurch gekennzeichnet, dass**
der radial mittlere Bereich (16) der Lagerbaugruppe (14) durch einen inneren Abschnitt (22) einer Distanzscheibe (21) gebildet ist, an dem der radial innere Bereich (15) der Lagerbaugruppe (14), insbesondere die Klemmringe (20), befestigt ist.

8. Rotationssystem (10) gemäss Anspruch 7,
**dadurch gekennzeichnet, dass**
der radial äussere Bereich (17) der Lagerbaugruppe (14) durch einen äusseren Abschnitt (23) der Distanzscheibe (21) gebildet ist, der am Gehäuse (11) gehalten ist.

9. Rotationssystem (10) gemäss einem der Ansprüche 7 und 8,
**dadurch gekennzeichnet, dass**
sich der innere Abschnitt (22) der Distanzscheibe (21) bis zwischen zwei Axiallagerscheiben (19) des radial inneren Bereichs (15) der Lagerbaugruppe (14) erstreckt, zwischen denen die Lagerscheibe (13) gelagert ist.

10. Rotationssystem (10) gemäss einem der vorangehenden Ansprüche,
**dadurch gekennzeichnet, dass**
der radial mittlere Bereich (16), insbesondere die Distanzscheibe (21), einen Elastizitätsmodul im Bereich von 1'000 MPa bis 700'000 MPa, bevorzugt von 3'000 MPa bis 400'000 MPa, besonders bevorzugt von 60'000 MPa bis 220'000 MPa aufweist.

11. Rotationssystem (10) gemäss einem der vorangehenden Ansprüche,
**dadurch gekennzeichnet, dass**
der radial innere Bereich (15), insbesondere die Klemmringe (20), einen Elastizitätsmodul im Bereich von 1'000 MPa bis 700'000 MPa, bevorzugt von 3'000 MPa bis 400'000 MPa, besonders bevorzugt von 60'000 MPa bis 220'000 MPa aufweist.

12. Rotationssystem (10) gemäss einem der Ansprüche 1 bis 10,
**dadurch gekennzeichnet, dass**
der radial innere Bereich (15), insbesondere die Axiallagerscheiben (19) und/oder die Klemmringe (20), einen Elastizitätsmodul im Bereich von 10'000 MPa bis 900'000 MPa, bevorzugt von 100'000 MPa bis 700'000 MPa, besonders bevorzugt von 200'000 MPa bis 650'000 MPa aufweist.

13. Rotationssystem (10) gemäss einem der vorangehenden Ansprüche,
**dadurch gekennzeichnet, dass**
die Lagerbaugruppe (14) mindestens einen sich in Umfangsrichtung erstreckenden Kühlkanal (24) aufweist.

14. Rotationssystem (10) gemäss Anspruch 13,
**dadurch gekennzeichnet, dass**
der sich in Umfangsrichtung erstreckende Kühlkanal (24) mit einem radialen Kühlkanal (29) in der Lagerbaugruppe (14) verbunden ist.

15. Rotationssystem (10) gemäss Anspruch 14,
**dadurch gekennzeichnet, dass**
der radiale Kühlkanal (29) in der Lagerbaugruppe (14) mit einem axialen Kühlkanal (30) im Gehäuse (11) verbunden ist.

16. Rotationssystem (10) gemäss einem der vorangehenden Ansprüche,
**dadurch gekennzeichnet, dass**
das Rotationssystem (10) eine insbesondere elektrisch angetriebene Strömungsmaschine (10) ist, wie beispielsweise ein Verdichter, insbesondere ein Turboverdichter, ein Motor oder ein Generator, eine Turbine, insbesondere ein Turbogenerator oder ein Turbolader, ein Kupplungssystem (insbesondere eine Magnetkupplung) oder ein Schwungrad, insbesondere ein kinetischer Speicher.

## Claims

1. A rotary system (10) with at least one axial gas bearing, containing:
- a housing (11),
- a shaft (12) rotatable relative to the housing (11),
- at least one bearing washer (13) fastened to the shaft (12),
- at least one bearing assembly (14) which supports the bearing washer (13) relative to the housing (11) by an axial gas bearing,
**characterized in that**
the bearing assembly (14) has, from the inside to outside, a radially inner region (15) supporting the bearing washer (13), a radially central region (16) and a radially outer region (17) held by the housing (11), wherein the radially inner region (15) contains at least one axial bearing element (19) and at least one holding element (20), wherein the bearing washer (13) is supported by means of the axial bearing element (19) and the holding element (20) holds the axial bearing element (19) in the axial direction.

2. The rotary system (10) according to claim 1,
**characterized in that**
the radially central region (16) is more elastic than the radially inner region (15), in particular due to at least one material weakening (18) of the radially central region (16) .

3. The rotary system (10) according to one of the preceding claims,
**characterized in that**
the radially central region (16) is more elastic than the radially outer region (17), in particular due to at least I one material weakening (18) of the radially central region (16) .

4. The rotary system (10) according to one of claims 2 and 3,
**characterized in that**
at least one of the material weakenings (18) is formed by a recess (18) formed in the axial direction or by an opening (18) penetrating the bearing assembly (14).

5. The rotary system (10) according to one of the preceding claims,
**characterized in that**
the holding element (20) holds the axial bearing element (19) by clamping, screwing, soldering, welding, shrinking, pressing, gluing, crystallization connection, press connection, plastic casting and/or laser sintering.

6. The rotary system (10) according to claim 5,
**characterized in that**
the at least one axial bearing element (19) contains or is formed by two axial bearing washers (19) and the at least one holding element (20) contains or is formed by two clamping rings (20), wherein the bearing washer (13) is mounted between the axial bearing washers (19) and the clamping rings (20) clamp the axial bearing washers (19) in the axial direction.

7. The rotary system (10) according to one of the preceding claims,
**characterized in that**
the radially central region (16) of the bearing assembly (14) is formed by an inner section (22) of a spacer disc (21) to which the radially inner region (15) of the bearing assembly (14), in particular the clamping rings (20), is fastened.

8. The rotary system (10) according to claim 7,
**characterized in that**
the radially outer region (17) of the bearing assembly (14) is formed by an outer section (23) of the spacer disc (21) held on the housing (11).

9. The rotary system (10) according to one of claims 7 and 8,
**characterized in that**
the inner section (22) of the spacer disc (21) extends between two axial bearing washers (19) of the radially inner region (15) of the bearing assembly (14) between which the bearing washer (13) is supported.

10. The rotary system (10) according to one of the preceding claims,
**characterized in that**
the radially central region (16), in particular the spacer disc (21), has a modulus of elasticity in the range from 1,000 MPa to 700,000 MPa, preferably from 3,000 MPa to 400,000 MPa, more preferably from 60,000 MPa to 220,000 MPa.

11. The rotary system (10) according to one of the preceding claims,
**characterized in that**
the radially inner region (15), in particular the clamping rings (20), has a modulus of elasticity in the range from 1,000 MPa to 700,000 MPa, preferably from 3,000 MPa to 400,000 MPa, more preferably from 60,000 MPa to 220,000 MPa.

12. The rotary system (10) according to one of claimsf 1 to 10,
**characterized in that**
the radially inner region (15), in particular the axial bearing washers (19) and/or the clamping rings (20), has a modulus of elasticity in the range from 10,000 MPa to 900,000 MPa, preferably from 100,000 MPa to 700,000 MPa, particularly preferably from 200,000 MPa to 650,000 MPa.

13. The rotary system (10) according to one of the preceding claims,
**characterized in that**
the bearing assembly (14) has at least one cooling channel (24) extending in the circumferential direction.

14. The rotary system (10) according claim 13,
**characterized in that**
the circumferentially extending cooling channel (24) is connected to a radial cooling channel (29) in the bearing assembly (14).

15. The rotary system (10) according to claim 14,
**characterized in that**
the radial cooling channel (29) in the bearing assembly (14) is connected to an axial cooling channel (30) in the housing (11).

16. The rotary system (10) according to one of the preceding claims,
**characterized in that**
the rotary system (10) is an in particular electrically driven turbomachine (10), such as for example a compressor, in particular a turbo compressor, an engine or a generator, a turbine, in particular a turbo generator or a turbocharger, a coupling system (in particular a magnetic coupling) or a flywheel, in particular a kinetic accumulator.

## Revendications

1. Système de rotation (10) muni d'au moins un palier à gaz axial, ledit système comprenant :
- un boîtier (11),
- un arbre (12) rotatif par rapport au boîtier (11),
- au moins un disque de palier (13) fixé à l'arbre (12),
- au moins un ensemble formant palier (14) qui supporte le disque de palier (13) par rapport au boîtier (11) par le biais d'un palier à gaz axial,
**caractérisé en ce que**
l'ensemble formant palier (14) comporte, de l'intérieur vers l'extérieur, une région radialement intérieure (15) supportant le disque de palier (13), une région radialement centrale (16) et une région radialement extérieure (17) maintenue par le boîtier (11), la région radialement intérieure (15) comprenant au moins un élément de palier axial (19) et au moins un élément de retenue (20), le disque de palier (13) étant supporté au moyen de l'élément de palier axial (19) et l'élément de retenue (20) maintenant l'élément de palier axial (19) dans la direction axiale.

2. Système de rotation (10) selon la revendication 1,
**caractérisé en ce que**
la région radialement centrale (16) est conçue pour être plus élastique que la région radialement intérieure (15), notamment en raison d'au moins une réduction de matière (18) de la région radialement centrale (16).

3. Système de rotation (10) selon l'une des revendications précédentes,
**caractérisé en ce que**
la région radialement centrale (16) est conçue pour être plus élastique que la région radialement extérieure (17), notamment en raison d'au moins une réduction de matière (18) de la région radialement centrale (16).

4. Système de rotation (10) selon l'une des revendications 2 et 3,
**caractérisé en ce que**
l'une au moins des réductions de matière (18) est formée par un évidement (18) ménagé dans la direction axiale ou par une couverture (18) ménagée à travers l'ensemble formant palier (14).

5. Système de rotation (10) selon l'une des revendications précédentes,
**caractérisé en ce que**
l'élément de retenue (20) maintient l'élément de palier axial (19) par serrage, vissage, brasage, soudage, rétrécissement, pressage, collage, liaison par cristallisation, liaison par pression, moulage de matière synthétique et/ou frittage laser.

6. Système de rotation (10) selon la revendication 5,
**caractérisé en ce que**
l'au moins un élément de palier axial (19) comprend, ou est formé par, deux disques de palier axial (19) et l'au moins un élément de retenue (20) comprend, ou est formé par, deux bagues de serrage (20), le disque de palier (13) étant monté entre les disques de palier axial (19) et les bagues de serrage (20) serrant les disques de palier axial (19) dans la direction axiale.

7. Système de rotation (10) selon l'une des revendications précédentes,
**caractérisé en ce que**
la région radialement centrale (16) de l'ensemble formant palier (14) est formée par une portion intérieure (22) d'un disque d'espacement (21) à laquelle est fixée la région radialement intérieure (15) de l'ensemble formant palier (14), en particulier les bagues de serrage (20).

8. Système de rotation (10) selon la revendication 7,
**caractérisé en ce que**
la région radialement extérieure (17) de l'ensemble formant palier (14) est formée par une portion extérieure (23) du disque d'espacement (21) qui est maintenue au niveau du boîtier (11).

9. Système de rotation (10) selon l'une des revendications 7 et 8,
**caractérisé en ce que**
la portion intérieure (22) du disque d'espacement (21) s'étend jusqu'entre deux disques de palier axial (19) de la région radialement intérieure (15) de l'ensemble formant palier (14), entre lesquels le disque de palier (13) est monté.

10. Système de rotation (10) selon l'une des revendications précédentes,
**caractérisé en ce que**
la région radialement centrale (16), en particulier le disque d'espacement (21), a un module d'élasticité dans la gamme allant de 1 000 MPa à 700 000 MPa, de préférence de 3 000 MPa à 400 000 MPa, de manière particulièrement préférée de 60 000 MPa à 220 000 MPa.

11. Système de rotation (10) selon l'une des revendications précédentes,
**caractérisé en ce que**
la région radialement intérieure (15), en particulier les bagues de serrage (20), a un module d'élasticité dans la gamme allant de 1 000 MPa à 700 000 MPa, de préférence de 3 000 MPa à 400 000 MPa, de manière particulièrement préférée de 60 000 MPa à 220 000 MPa.

12. Système de rotation (10) selon l'une des revendications 1 à 10,
**caractérisé en ce que**
la région radialement intérieure (15), en particulier les disques de palier axial (19) et/ou les bagues de serrage (20), a un module d'élasticité dans la gamme allant de 10 000 MPa à 900 000 MPa, de préférence de 100 000 MPa et 700 000 MPa, de manière particulièrement préférée de 200 000 MPa à 650 000 MPa.

13. Système de rotation (10) selon l'une des revendications précédentes,
**caractérisé en ce que**
l'ensemble de palier (14) comporte au moins un canal de refroidissement (24) s'étendant dans la direction circonférentielle.

14. Système de rotation (10) selon la revendication 13,
**caractérisé en ce que**
le canal de refroidissement (24) s'étendant dans la direction circonférentielle est relié à un canal de refroidissement radial (29) ménagé dans l'ensemble formant palier (14).'

15. Système de rotation (10) selon la revendication 14,
**caractérisé en ce que**
le canal de refroidissement radial (29) ménagé dans l'ensemble formant palier (14) est relié à un canal de refroidissement axial (30) ménagé dans le boîtier (11).

16. Système de rotation (10) selon l'une des revendications précédentes,
**caractérisé en ce que**
le système de rotation (10) est une machine à fluide (10), en particulier à entraînement électrique, comme par exemple un compresseur, notamment un turbocompresseur, un moteur ou un générateur, une turbine, notamment un turbogénérateur ou un turbocompresseur à suralimentation, un système d'embrayage (en particulier un embrayage magnétique) ou un volant, en particulier un accumulateur cinétique.
